# EUROPEAN PATENT APPLICATION

(11) **EP 3 572 236 A1**
(43) Date of publication of application: **27.11.2019**
(21) Application number: 18754197.4
(22) Date of filing: 13.02.2018
(51) Int. Cl.: B41M 5/00, B05D 1/26, B05D 7/24, B32B 15/082, B41J 2/01, B41M 5/52, C09D 11/32

(54) **PRINTED MATTER AND PRODUCTION METHOD FOR PRINTED MATTER**

(30) Priority: 20.02.2017 JP 2017029349
(71) Applicant: Seiren Co., Ltd., Fukui-shi Fukui 918-8560 (JP)
(72) Inventor: KAWAMURA, Akihiro, Fukui-shi Fukui 918-8560 (JP)
(74) Representative: Hynell Intellectual Property AB
(86) International application number: PCT/JP2018/004868
(87) International publication number: WO 2018/151087

(57) **Abstract**

A printed matter comprising a substrate and an ink jet image layer formed on the substrate, in which the ink jet image layer comprises a coloring material and a fluorine resin.

## Description

### TECHNICAL FIELD

The present invention relates to a printed matter and a method for producing a printed matter. In particular the present invention relates to a printed matter showing an excellent weather resistance even in the case where no top coat is provided on an ink jet image layer, and a method for producing the printed matter.

### BACKGROUND ART

Recently attention has been paid to a composition comprising a fluorine resin as a composition for producing a printed matter being excellent in weather resistance. For example, Patent Document 1 discloses a fluorine-containing coating composition comprising a main compound comprising a copolymer comprising a fluoroolefin and the like and a curing agent comprising a polyisocyanate compound.

### PRIOR ART DOCUMENT

### Patent Document

Patent Document 1: JP 5481859 B

### SUMMARY OF THE INVENTION

However no technique for obtaining a printed matter being excellent in weather resistance by a method other than a method of applying a coating composition is known. Further, conventionally there is a method of providing a top coat in order to give weather resistance after formation of an image. However, in the case where a top coat is provided by coating after a coating composition has been applied by a method (for example, an ink jet method) other than a method of applying a coating composition, a production process becomes complicated.

The present invention was made to solve such a problem as mentioned above, and an object of the present invention is to provide a printed matter, on which an ink jet image layer exhibiting excellent weather resistance even in the case where a top coat is not provided is formed by an ink jet method, and a method for producing the printed matter.

In one aspect of the present invention for solving the above-mentioned problem, the printed matter is a printed matter comprising a substrate and an ink jet image layer formed on the substrate, and the ink jet image layer comprises a coloring material and a fluorine resin.

In one aspect of the present invention for solving the above-mentioned problem, the method for producing a printed matter is a method for producing a printed matter comprising an ink jetting step of applying an ink jet ink on a substrate by an ink jet method to form an ink jet image layer comprising a coloring material and a fluorine resin.

### BRIEF DESCRIPTION OF THE DRAWINGS

FIG. 1 is a schematic cross-sectional view for explaining a printed matter according to one embodiment of the present invention, where an ink jet image layer is a single layer.
FIG. 2 is a schematic cross-sectional view for explaining a printed matter according to one embodiment of the present invention, where an ink jet image layer comprises two layers.

### EMBODIMENT FOR CARRYING OUT THE INVENTION

### <Printed matter>

A printed matter according to one embodiment of the present invention comprises a substrate and an ink jet image layer formed on the substrate. The ink jet image layer comprises a coloring material and a fluorine resin. Thus, in the printed matter according to this embodiment, the ink jet image layer is formed by an ink jet method. Further, the printed matter comprises the ink jet image layer comprising a fluorine resin. Such an ink jet image layer shows enough weather resistance even in the case where no top coat is provided. Therefore, the printed matter exhibits a desired color for a longer period of time. In addition, the printed matter according to this embodiment may further comprise a base layer between the substrate and the ink jet image layer. While the printed matter according to this embodiment shows enough weather resistance even in the case where no top coat is provided, a top coat may be further provided so that more excellent weather resistance is exhibited. The respective features will be described below.

### (Substrate)

A substrate of the printed matter is not limited particularly. Examples of the substrate include metal sheets such as a steel sheet, an aluminum sheet and a stainless steel sheet; plastic sheets or films such as acrylic, polycarbonate, ABS, polypropylene, polyester and vinyl chloride sheets or films; ceramic sheet, concrete, wood, glass and the like. Further, the substrate may be fabrics made of polyester fibers such as a cationic-dyeable polyester (CDP) fiber, a polyethylene terephthalate (PET) fiber, a polybutylene terephthalate (PBT) fiber, a polytrimethylene terephthalate (PTT) fiber, a wholly aromatic polyester fiber and a polylactic acid fiber, an acetate fiber, a triacetate fiber, a polyurethane fiber, a nylon fiber and a complex fiber thereof. These can be selected appropriately depending on applications. In the case of the substrate being a fabric, it is preferable that the fabric is subjected to treatment with a pretreatment agent before printing. Examples of the pretreatment agent include a water-soluble polymer, a non-water-soluble inactive organic compound, a flame retardant, an ultraviolet absorber, an anti-reducing agent, an antioxidant, a pH regulator, hydrotropes, an anti-foaming agent, a penetrating agent, a microporous-forming agent and the like. Examples of a method of applying these pretreatment agents to a fabric include a pad dyeing method, a spraying method, a dipping method, a coating method, a laminating method, a gravure coating method, an ink jet printing method and the like.

### (Base layer)

The base layer is a layer suitably provided between the substrate and the ink jet image layer. The base layer can be provided for making a surface of the substrate uniform and enhancing adhesion of the ink jet image layer to the substrate. The base layer can be formed by applying a base composition onto the substrate.

A resin composition constituting the base layer is not limited particularly, and examples thereof include a polyester resin, a polyurethane resin, an acrylic resin, a silicone resin, an epoxy resin, an alkyd resin, an amino alkyd resin, a fluorine resin and the like. These may be used in combination thereof. Among these, it is preferable that the resin composition of the base layer comprise a fluorine resin so that excellent weather resistance is imparted. Fluorine resins like those to be included in the ink jet image layer described later can be used.

When the base composition comprises a fluorine resin, a content of the fluorine resin in the resin composition is preferably not less than 5% by mass, more preferably not less than 10% by mass. On the other hand, the content of the fluorine resin in the resin composition is preferably not more than 80% by mass, more preferably not more than 50% by mass. When the base composition comprises the fluorine resin within the range mentioned above, the obtained printed matter having the base layer exhibit excellent weather resistance not only on the ink jet image layer described later but also on the overall printed matter.

The base composition may comprise a curing agent, a dispersant, a slipping agent, a thickener, an anti-settling agent, an antifoaming agent, an antistatic agent, an antioxidant, a curing catalyst, an anti-dazzling agent, a levelling agent, a smoothing agent, an ultraviolet absorber and the like according to necessity.

A method of forming the base layer on the substrate is not limited particularly, and the base layer can be formed on the substrate by applying the base composition thereon by a spraying method, a roll coater, hand coating, an ink jet method and the like.

When the base layer is provided, a thickness of the base layer is not limited particularly, and a dry coating thickness of the base layer is preferably 5 µm or more, more preferably 10 µm or more. On the other hand, the dry coating thickness of the base layer is preferably 100 µm or less, more preferably 50 µm or less.

### (Ink jet image layer)

The ink jet image layer is a layer to be formed on the substrate by an ink jet method and mainly comprises the coloring material and the fluorine resin. When the base layer is provided on the substrate, the ink jet image layer may be provided on the base layer. Such an ink jet image layer exhibits sufficient weather resistance even if the top coat is not provided. Each component to be blended in the ink jet ink used for forming the ink jet image layer is then described below. In this embodiment, the ink jet image layer may be formed using a single ink jet ink or may be formed using a plurality of ink jet inks (for example, a first ink jet ink and a second ink jet ink described later) having different components. When the ink jet image layer is formed using a plurality of ink jet inks, the coloring material may be blended in either one of inks, and the fluorine resin may be blended in at least either one of inks

### Coloring material

The coloring material may be various inorganic pigments or organic pigments. Examples of inorganic pigments include oxides, complex oxides, hydroxides, sulfides, ferrocyanides, chromates, carbonates, silicates, phosphates, carbons (carbon black), metallic flakes and the like. Examples of organic pigments include nitroso pigments, lake pigments, azo lake pigments, insoluble azo pigments, monoazo pigments, disazo pigments, disazo condensation pigments, benzimidazolone pigments, phthalocyanine pigments, anthraquinone pigments, perylene pigments, quinacridone pigments, dioxazine pigments, isoindoline pigments, azomethine pigments, pyrrolo-pyrrole pigments and the like. These pigments may be used in combination. Among these, it is preferable that the printed matter according to this embodiment comprises an inorganic pigment as the coloring material since color fading due to degrading of the coloring material is hardly caused.

A content of the coloring material is not limited particularly. One example of the content of the coloring material in the ink jet ink is preferably not less than 0.01% by mass, more preferably not less than 0.1% by mass. Further, the content of the coloring material in the ink jet ink is preferably not more than 30% by mass, more preferably not more than 20% by mass. When the content of the coloring material is less than 0.01% by mass, sufficient coloring tends not to be provided. Meanwhile, when the content of the coloring material is more than 30% by mass, there is a tendency that a viscosity of the ink jet ink becomes high and stability in discharging at the time of ink jet printing deteriorates.

### (Fluorine resin)

The fluorine resin is blended for imparting weather resistance to a printed matter. The fluorine resin is not limited particularly. Examples of the fluorine resin include copolymers of any of various fluorine-containing monomers and a vinyl monomer. Among these, the fluorine resin is preferably a copolymer with a vinyl ether monomer among vinyl monomers. Further, the fluorine resin is more preferably a copolymer of fluoroethylene and a vinyl ether monomer explained later.

Examples of the fluorine-containing monomer include tetrafluoroethylene, chlorotrifluoroethylene, trichlorofluoroethylene, hexafluoropropylene, vinylidene fluoride, vinyl fluoride, trifluoromethyl trifluoroethylene and the like. Among these, the fluorine-containing monomer is preferably fluoroethylene, more preferably tetrafluoroethylene or chlorotrifluoroethylene, from a point that a printed matter exhibiting excellent weather resistance can be obtained.

Examples of the vinyl monomer include nonionic monoethylenic unsaturated monomers and bi-functional vinyl monomers. Examples of the nonionic monoethylenic unsaturated monomers include styrene, vinyltoluene, ethylene, vinyl acetate, vinyl chloride, vinylidene chloride, acrylonitrile, (meth)acrylamide, (meth)acrylic esters and the like. Examples of the (meth)acrylic esters include methyl acrylate, methyl methacrylate, ethyl (meth)acrylate, butyl (meth)acrylate, 2-hydroxyethyl (meth)acrylate, 2-ethylhexyl (meth)acrylate, benzyl (meth)acrylate, lauryl (meth)acrylate, oleyl (meth)acrylate, palmityl (meth)acrylate, stearyl (meth)acrylate and the like. Examples of the bi-functional vinyl monomers include divinylbenzene, allyl methacrylate, ethylene glycol dimethacrylate, 1,3-butanediol dimethacrylate, diethylene glycol dimethacrylate, trimethylolpropane trimethacrylate and the like.

Examples of the vinyl ethers include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether and trimethylolpropane trivinyl ether, monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenylether-o-propylene carbonate, dodecyl vinyl ether, diethylene glycol monovinyl ether and octadecyl vinyl ether and the like.

A copolymerization ratio of the fluorine-containing monomer to the vinyl monomer is not limited particularly. Example of the copolymerization ratio is the fluorine-containing monomer: the vinyl monomer = 3 to 1 : 1 to 2 (weight ratio). When the copolymerization ratio is within such a range, an obtained printed matter is apt to exhibit excellent weather resistance. It is noted that a polymerization method is not limited particularly. Examples of the polymerization method include solution polymerization, suspension polymerization, bulk polymerization, emulsion polymerization and the like.

The obtained fluorine resin may be any of an alternating copolymer, a block copolymer, a random copolymer and a graft copolymer. Among these, the fluorine resin is preferably an alternating copolymer of fluoroethylene and a vinyl monomer. According to the ink jet ink comprising such a fluorine resin, a printed matter having further excellent weather resistance is obtained easily. In the present embodiment, it is noted that the "alternating copolymer" means a copolymer comprising a much higher amount of a bond of a fluoroethylene unit and a vinyl monomer unit than a bond of a fluoroethylene unit and a fluoroethylene unit and a bond of a vinyl monomer unit and a vinyl monomer unit. Specifically, it is preferable that the alternating copolymer of the present embodiment comprises 90 to 100 mole % of the bond of a fluoroethylene unit and a vinyl monomer unit. In the present embodiment, it is noted that the alternating copolymer may comprise a small number of random bonding portions and block bonding portions. The above-mentioned bonds can be discriminated by, for example, ¹H-NMR measurement and ²⁹Si-NMR measurement. Further, for a method of analyzing alternating copolymerizability, for example, Journal of Applied Polymer Science, Vol. 106, 1007-1013 (2007) can be referred to.

A hydroxyl value of the fluorine resin of the present embodiment is preferably 20 mg KOH/g or more, more preferably 30 mg KOH/g or more. The hydroxyl value is preferably 100 mg KOH/g or less, more preferably 80 mg KOH/g or less. When the hydroxyl value is within the above-mentioned range, the ink jet ink is excellent in curability, and stability in discharging at the time of ink jet printing is more excellent. In the case of the hydroxyl value being less than 20 mg KOH/g, there is a tendency that the fluorine resin hardly reacts with the curing agent. Meanwhile, when the hydroxyl value is more than 100 mg KOH/g, there is a tendency that a dispersion system of the ink jet ink easily becomes unstable and stability in discharging easily deteriorates. In the present embodiment, it is noted that the hydroxyl value is the number of milligrams (mg) of potassium hydroxide required for neutralizing acetic acid bonded to a hydroxyl group when 1 g of a sample (a solid content of a resin) was acetylated, and is measured by a method in accordance with JIS K 0070.

An acid value of the fluorine resin is preferably 5 mg KOH/g or less, more preferably 4 mg KOH/g or less. When the acid value is 5 mg KOH/g or less, a dispersion system of the ink jet ink easily becomes stable and stability in discharging is excellent. Meanwhile, when the acid value is more than 5 mg KOH/g, there is a tendency that a dispersion system of the ink jet ink easily becomes unstable and stability in discharging easily deteriorates. In the present embodiment, it is noted that the acid value shows a mass (mg) of potassium hydroxide required for neutralizing an acidic constituent contained in 1 g of a sample (a solid content of a resin) and is measured by a method in accordance with JIS K 0070.

It is preferable that the fluorine resin in the present embodiment is soluble in a solvent. Specifically the solubility of the fluorine resin based on a solid content thereof in diethylene glycol diethyl ether is preferably not less than 500 (g/L), more preferably not less than 1,000 (g/L). When the solubility of the fluorine resin in a glycol ether solvent is within the above-mentioned range, re-precipitation of the fluorine resin in the ink jet ink hardly occurs for a long period of time, and stability in discharging at the time of ink jet printing is more excellent.

Further, the solubility of the fluorine resin in the present embodiment in water based on a solid content thereof is preferably not more than 50 (g/L), more preferably not more than 30 (g/L). Accordingly, a printed matter obtained by using such an ink jet ink has good water resistance and excellent weather resistance. Meanwhile, when the solubility in water is more than 50 (g/L), water resistance of a printed matter obtained by using such an ink jet ink tends to deteriorate.

The fluorine resin of the present embodiment may be used in a state of being dispersed or dissolved in a predetermined solvent or may be used in a solventless state of containing no solvent (namely in a solid or semi-solid state). However, in the case of the fluorine resin in a state of being dispersed or dissolved in a solvent, when an ink jet ink comprises it, a head may be damaged at the time of ink jet printing depending on kind of a solvent. Therefore, it is preferable that the fluorine resin of the present embodiment does not comprise a solvent having no suitability for a head, and a solventless state is more preferable. Such a solventless fluorine resin does not comprise a solvent being poor in suitability for a head, and therefore, at the time of ink jet printing, a head of an ink jet recording apparatus is hardly damaged.

A weight-average molecular weight (Mw) of the fluorine resin is not limited particularly. Example of Mw is preferably not less than 5,000, more preferably not less than 8,000. Mw is preferably not more than 50,000, more preferably not more than 40,000. When Mw is within the above-mentioned range, the fluorine resin is easily dissolved in a solvent. An ink jet ink has improved drying characteristics, and is excellent in stability in discharging at the time of ink jet printing. Further, an obtained printed matter has less tackiness on a surface of an image layer, and when printed matters are overlapped, anti-blocking property is excellent. When the Mw is less than 5,000, there is a tendency that tackiness easily arises on an obtained printed matter and anti-blocking property is deteriorated. Meanwhile, when the Mw is more than 50,000, there is a tendency that solubility of the fluorine resin decreases and stability in discharging of an ink jet ink at the time of ink jet printing deteriorates. It is noted that in the present embodiment, the Mw is a value measured, for example, by GPC (gel permeation chromatography) and can be measured using a high-speed GPC device (HLC-8120GPC manufactured by TOSOH CORPORATION).

A content of the fluorine resin is not limited particularly. Example of the content of the fluorine resin based on a solid content thereof is preferably not less than 2% by mass, more preferably not less than 5% by mass in an ink jet ink. Further, the content of the fluorine resin is preferably not more than 40% by mass, more preferably not more than 30% by mass in an ink jet ink. When the content of the fluorine resin is not less than 2% by mass, stability in discharging at the time of ink jet printing tends to be excellent. Meanwhile, when the content of the fluorine resin is more than 40% by mass, there is a tendency that a viscosity of the ink jet ink becomes high and stability in discharging at the time of ink jet printing deteriorates.

### (Optional components)

The ink jet ink can comprise optional components known in a field of an ink jet ink in addition to the above-mentioned coloring material and fluorine resin. Examples of optional components include various binder resins (excluding fluorine resin), various solvents, a curing agent, a curing catalyst, a slipping agent (a levelling agent), a dispersant, a polymerization accelerator, a polymerization inhibitor, a penetration accelerator, a wetting agent (moisturizer), a fixing agent, an antifungal agent, a preservative, an antioxidant, a chelating agent, a thickener and the like.

### Binder resin

The binder resin is compounded, for example, in order to adjust a viscosity of the ink jet ink and adjust a hardness of the obtained printed matter and control a shape of the obtained printed matter.

Kind of the binder resin is not limited particularly. Examples of the binder resin include an epoxy resin, a diallyl phthalate resin, a silicone resin, a phenol resin, an unsaturated polyester resin, a polyimide resin, a polyurethane resin, a melamine resin, a urea resin, an ionomer resin, an ethylene ethyl acrylate resin, an acrylonitrile acrylate styrene copolymer resin, an acrylonitrile styrene resin, an acrylonitrile polyethylene chloride styrene copolymer resin, an ethylene vinyl acetate resin, an ethylene vinyl alcohol copolymer resin, an acrylonitrile butadiene styrene copolymer resin, a vinyl chloride resin, a chlorinated polyethylene resin, a polyvinylidene chloride resin, a cellulose acetate resin, a polyoxymethylene resin, a polyamide resin, a polyalylate resin, a thermoplastic polyurethane elastomer, a polyether ether ketone resin, a polyether sulfone resin, polyethylene, polypropylene, a polycarbonate resin, polystyrene, a polystyrene maleic acid copolymer resin, a polystyrene acrylic acid copolymer resin, a polyphenylene ether resin, a polyphenylene sulfide resin, a polybutadiene resin, a polybutylene terephthalate resin, an acrylic resin, a methacrylic resin, a methylpentene resin, polylactic acid, a polybutylene succinate resin, a butyral resin, a formal resin, polyvinyl alcohol, polyvinyl pyrrolidone, ethyl cellulose, carboxymethyl cellulose, gelatin, copolymer resins thereof and the like. The binder resin can be selected adequately in consideration of a film strength, a viscosity, a viscosity of a remainder of an ink jet ink, dispersion stability of a coloring material, thermal stability, a non-coloring property, water resistance and chemical resistance. The binder resins may be used in combination thereof.

Among these binder resins, an acrylic resin, a vinyl chloride resin and a silicone resin are preferable from the viewpoint of excellent heat resistance and weather resistance.

An acrylic resin is not limited particularly. Examples thereof include polymers of acrylic esters (acrylate) or methacrylic esters (methacrylate). More specifically examples of the acrylic resin include polymers of alkyl acrylates such as methyl acrylate, ethyl acrylate, propyl acrylate, butyl acrylate, isobutyl acrylate and 2-ethylhexyl acrylate; alkyl methacrylates such as methyl methacrylate, ethyl methacrylate, propyl methacrylate, butyl methacrylate, isobutyl methacrylate and 2-ethylhexyl methacrylate; alkyl acrylates having hydroxyl group such as 2-hydroxyethyl acrylate, 2-hydroxypropyl acrylate and 2-hydroxybutyl acrylate; methacrylates having hydroxyl group such as 2-hydroxyethyl methacrylate, 2-hydroxypropyl methacrylate and 4-hydroxybutyl methacrylate; and the like. These may be used in combination thereof.

A weight-average molecular weight (Mw) of the acrylic resin is not limited particularly. The Mw is preferably not less than 5,000, more preferably not less than 10,000. The Mw is preferably not more than 100,000, more preferably not more than 50,000. When the Mw is within the above-mentioned range, the ink jet ink comprising such an acrylic resin is excellent in stability in discharging at ink jet printing.

The vinyl chloride resin is not limited particularly. Examples of the vinyl chloride resin include copolymers of a vinyl chloride resin with other monomer such as vinyl acetate, vinylidene chloride, acrylic acid, maleic acid and vinyl alcohol. Among these, it is preferable that the vinyl chloride resin is a copolymer (vinyl chloride/vinyl acetate copolymer) comprising vinyl chloride and a component unit derived from vinyl acetate.

The vinyl chloride/vinyl acetate copolymer can be obtained, for example, by suspension polymerization. The vinyl chloride/vinyl acetate copolymer preferably comprises 70 to 90% by mass of a vinyl chloride unit. In the case of the above-mentioned range, the vinyl chloride/vinyl acetate copolymer stably dissolve in the ink jet ink, and therefore, is excellent in storage stability for a long period of time. Further, the ink jet ink is excellent in stability in discharging.

The vinyl chloride/vinyl acetate copolymer may comprise other component unit in addition to the vinyl chloride unit and the vinyl acetate unit according to necessity. Examples of the other component unit include a carboxylic acid unit, a vinyl alcohol unit, a hydroxyalkyl acrylate unit and the like. Among these, the other component unit is preferably a vinyl alcohol unit.

A number-average molecular weight (Mn) of the vinyl chloride resin is not limited particularly. The Mn of the vinyl chloride resin is preferably not less than 10,000, more preferably not less than 12,000. The Mn is preferably not more than 50,000, more preferably not more than 42,000. The Mn can be measured by GPC, and can be obtained as a relative value based on polystyrene.

The silicone resin is not limited particularly. Examples of the silicone resin include a methyl straight silicone resin (poly(dimethylsiloxane)), a methylphenyl straight silicone resin (poly(dimethylsiloxane, in which a part of methyl groups has been replaced with phenyl groups), an acrylic resin-modified silicone resin, a polyester resin-modified silicone resin, an epoxy resin-modified silicone resin, an alkyd resin-modified silicone resin, a rubber silicone resin and the like. These may be used in combination thereof. Among these, preferred are a methyl straight silicone resin, a methylphenyl straight silicone resin and an acrylic resin-modified silicone resin.

The silicone resin may be one dissolved in an organic solvent or the like. Examples of the organic solvent include xylene, toluene and the like.

A number-average molecular weight (Mn) of the silicone resin is not limited particularly. The Mn of the silicone resin is preferably not less than 10,000, more preferably not less than 20,000. Further, the Mn is preferably not more than 5,000,000, more preferably not more than 3,000,000. The Mn can be measured by GPC, and can be obtained as a relative value based on polystyrene.

Referring to the overall explanation of the binder resin, a content of the binder resin is not limited particularly. The content of the binder resin based on a solid content thereof is preferably not less than 1% by mass, more preferably not less than 3% by mass, further preferably not less than 5% by mass in the ink jet ink. Further, the content of the binder resin is preferably not more than 40% by mass, more preferably not more than 30% by mass, further preferably not more than 25% by mass in the ink jet ink. When the content of the binder resin is less than 1% by mass, there is a tendency that desired characteristics are hardly obtained by the binder resin, and adhesiveness to the substrate (or the base layer provided on the substrate) is lowered. On the other hand, when the content of the binder resin exceeds 40% by mass, there is a tendency that a viscosity of the ink jet ink increases and stability in discharging at the time of ink jet printing decreases.

### Solvent

The solvent is a liquid component for dissolving the binder resin in the ink jet ink. Kind of the solvent is not limited particularly. Examples of the solvent include water, glycol ether solvents, acetate solvents, alcohol solvents, ketone solvents, ester solvents, hydrocarbon solvents, fatty acid ester solvents, aromatic solvents and the like. These may be used in combination. It is preferable that the solvent of the present embodiment comprises at least either of the glycol ether solvent or the acetate solvent. Both the glycol ether solvent and the acetate solvent have a low viscosity and a relatively high boiling point. Therefore, an ink jet ink comprising those solvents has improved drying characteristics and more excellent stability in discharging at the time of ink jet printing.

Examples of the glycol ether solvents include ethylene glycol monomethyl ether, ethylene glycol monoethyl ether, ethylene glycol mono(iso)propyl ether, ethylene glycol monobutyl ether, diethylene glycol monoethyl ether, diethylene glycol mono-n-butyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, triethylene glycol monomethyl ether, triethylene glycol monoethyl ether, triethylene glycol mono-n-propyl ether, triethylene glycol mono-n-butyl ether, tripropylene glycol monoethyl ether, tripropylene glycol mono-n-propyl ether, tripropylene glycol mono-n-butyl ether, diethylene glycol dimethyl ether, triethylene glycol dimethyl ether, tetraethylene glycol dimethyl ether, polyethylene glycol dimethyl ether, diethylene glycol diethyl ether, diethylene glycol dibutyl ether, diethylene glycol ethyl methyl ether, diethylene glycol isopropyl methyl ether, diethylene glycol butyl methyl ether, triethylene glycol butyl methyl ether, dipropylene glycol dimethyl ether, tripropylene glycol dimethyl ether and the like.

Examples of the acetate solvents include alkylene glycol monoalkyl ether acetates such as ethylene glycol monomethyl ether acetate, ethylene glycol monoethyl ether acetate, ethylene glycol monopropyl ether acetate, ethylene glycol monoisopropyl ether acetate, ethylene glycol mono-n-butyl ether acetate, ethylene glycol mono-sec-butyl ether acetate, ethylene glycol monoisobutyl ether acetate, ethylene glycol mono-tert-butyl ether acetate, propylene glycol monomethyl ether acetate, propylene glycol monoethyl ether acetate, propylene glycol monoisopropyl ether acetate, propylene glycol monopropyl ether acetate, propylene glycol mono-n-butyl ether acetate, propylene glycol mono-sec-butyl ether acetate, propylene glycol monoisobutyl ether acetate, propylene glycol mono-tert-butyl ether acetate, 3-methyl-3-methoxybutyl acetate, 3-methyl-3-ethoxybutyl acetate, 3-methyl-3-propoxybutyl acetate, 3-methyl-3-isopropoxybutyl acetate, 3-methyl-3-n-butoxyethyl acetate, 3-methyl-3-isobutoxybutyl acetate, 3-methyl-3-sec-butoxybutyl acetate and 3-methyl-3-tert-butoxybutyl acetate, ethylene glycol diacetate, diethylene glycol diacetate, triethylene glycol diacetate, propylene glycol diacetate, dipropylene glycol diacetate, tripropylene glycol diacetate and the like.

It is preferable that a boiling point of the solvent of the present embodiment is preferably 150°C or higher, more preferably 180°C or higher. Further, the boiling point of the solvent is preferably 300°C or lower, more preferably 280°C or lower. When the boiling point is within the above-mentioned range, an ink jet ink has further improved drying characteristics, and is more excellent in stability in discharging at the time of ink jet printing. Further, according to the ink jet ink, a vivid printed matter with less ink staining is formed easily. When the boiling point of the solvent is lower than 150°C, there is a tendency that the ink jet ink is easily dried around a head nozzle and stability in discharging is deteriorated. Meanwhile, when the boiling point of the solvent is more than 300°C, the ink jet ink is hardly dried and it takes a time for a drying step when forming a printed matter. Also, an image of the printed matter is easily stained with the ink.

A content of the solvent is not limited particularly. One example of the content of the solvent in the ink jet ink is preferably not less than 50% by mass, more preferably not less than 60% by mass. Further, the content of the solvent in the ink jet ink is preferably not more than 99% by mass, more preferably not more than 80% by mass. When the content of the solvent is less than 50% by mass, there is a tendency that a viscosity of the ink jet ink becomes higher and stability in discharging at the time of ink jet printing is deteriorated. Meanwhile, when the content of the solvent is more than 99% by mass, there is a tendency that a proportion of the binder resin to be added in the ink jet ink becomes lower and desired characteristics are hardly obtained.

### Curing agent

A curing agent can be blended in order to cure an ink jet ink. The curing agent is not limited particularly. Examples of the curing agent include a carbodiimide compound, an aziridine compound, a metal chelate compound, an isocyanate compound, a melamine compound, an epoxy compound, an oxazoline compound, a urea compound, a polyamine compound, a polyethyleneimine compound, an acrylamide compound and the like. These curing agents may be used in combination. Among these, preferred is a curing agent comprising an isocyanate resin. Accordingly, a printed matter obtained by using such an ink jet ink has more excellent weather resistance.

An isocyanate resin may be a compound having two or more isocyanate groups in one molecule thereof, and any of general-purpose, less-yellowing and non-yellowing isocyanate resins can be used. Examples of general-purpose isocyanate resins include tolylene diisocyanate (TDI), isocyanurate, i.e. trimerized TDI, 4,4-diphenylmethane diisocyanate (MDI) and polymeric diphenylmethane diisocyanate (polymeric MDI). Examples of less-yellowing isocyanate resins include xylylenediamine (XDI) and the like. Examples of non-yellowing isocyanate resins include hexamethylene diisocyanate (HDI), isophorone diisocyanate (IPDI), hydrogenated XDI, hydrogenated MDI and the like. It is preferable that among these isocyanate resins, the curing agent comprises preferably non-yellowing blocked isocyanate, more preferably non-yellowing blocked isocyanate having an isocyanurate structure. The ink jet ink comprising such a curing agent is more excellent in curability. Further, by using such an ink jet ink, an obtained printed matter is further excellent in weather resistance. Accordingly, the printed matter exhibits a desired color for a long period of time.

A content of the curing agent is not limited particularly. The content varies with an adding amount, a hydroxyl value and an acid value of the fluorine resin, and therefore, is not determined unequivocally. One example of the content of the curing agent in the ink jet ink is preferably not less than 0.1% by mass, more preferably not less than 1% by mass. Further, the content of the curing agent in the ink jet ink is preferably not more than 20% by mass, more preferably not more than 10% by mass. When the content of the curing agent is less than 0.1% by mass, there is a tendency that the curing agent cannot react sufficiently with the fluorine resin, and desired performance cannot be obtained. Meanwhile, when the content of the curing agent is more than 20% by mass, there is a tendency that there is a fear of excessive addition of the curing agent for the fluorine resin, and weather resistance of an obtained printed matter deteriorates.

### Curing catalyst

Examples of the curing catalyst include organic acid salt, alcoholate or a chelate compound of metal such as tin, titanium, zirconium, iron, antimony, bismuth, manganese, zinc or aluminum; amine such as hexylamine or dodecylamine; amine salts such as acetic hexylamine or dodecylamine phosphate; quaternary ammonium salt such as benzyltrimethylammonium acetate; alkali metal salt such as potassium acetate and the like. More specifically there are exemplified organobismuth compounds such as bismuth octylate and bismuth neodecanoate; organotin compounds such as dibutyltin dilaurate, dibutyltin dioctylate, dimethyltin dineodecanoate and stannous octoate; and organotitanium compounds such as tetrabutyl titanate, tetraisopropyl titanate, diisopropoxybis(acetylacetonate) titanium and diisopropoxybis(ethylacetoacetate) titanium. These may be used in combination. In the present embodiment, the curing catalyst is preferably tin compounds, more preferably dialkyltin compounds such as dibutyltin dilaurate and dimethyltin dineodecanoate, further preferably dibutyltin dilaurate. When the ink comprises dibutyltin dilaurate as the curing catalyst, an obtained ink jet ink is excellent in curability.

When the ink jet ink comprises a curing catalyst, a content thereof is not limited particularly. One example of the content of the curing catalyst in the ink jet ink is preferably not less than 0.001% by mass, more preferably not less than 0.01% by mass. Further, the content of the curing catalyst in the ink jet ink is preferably not more than 5% by mass, more preferably not more than 3% by mass. When the content of the curing catalyst is less than 0.001% by mass, performance of a curing catalyst tends not to be exhibited sufficiently. Meanwhile, when the content of the curing catalyst is more than 5% by mass, there is a tendency that curability of the ink jet ink becomes high and stability in discharging at the time of ink jet printing deteriorates.

### Dispersant

A dispersant is compounded suitably for dispersing the coloring material. The dispersant is not limited particularly. Examples of the dispersant include anionic surfactants, nonionic surfactants and high molecular weight dispersants. The dispersants may be used in combination.

Examples of the anionic surfactants include fatty acid salt, alkyl sulfate ester salt, alkyl benzene sulfonate, alkyl naphthalene sulfonate, lignin sulfonate, dialkyl sulfosuccinate, alkyl phosphate, naphthalenesulfonate and formaldehyde condensate, polyoxyethylene alkyl sulfate, and substituted derivatives thereof.

Examples of the nonionic surfactants include polyoxyethylene alkyl ether, polyoxyethylene alkyl phenyl ether, polyoxyethylene fatty acid ester, sorbitan fatty acid ester, polyoxyethylene sorbitan fatty acid ester, polyoxyethylene alkyl amine, glycerin fatty acid ester, oxyethylene-oxypropylene block copolymer, and substituted derivatives thereof.

Preferred high molecular weight dispersants are those having both of an acid value and a base value and having the acid value larger than the base value from a point that a stable dispersing characteristic is obtained. Examples of the high molecular weight dispersants include PB Series available from Ajinomoto Fine-Techno Co., Inc., Hinoact Series available from Kawaken Fine Chemicals Co., Ltd., SOLSPERSE Series available from Lubrizol Japan, DISPARLON Series available from Kusumoto Chemicals, Ltd., Efka (registered trade mark) available from BASF Japan and the like.

A content of the dispersant is determined properly according to kind and content of the coloring material to be dispersed. One example of the content of the dispersant is preferably not less than 5 parts by mass, more preferably not less than 10 parts by mass based on 100 parts by mass of the coloring material. Further, the content of the dispersant is preferably not more than 150 parts by mass, more preferably not more than 80 parts by mass based on 100 parts by mass of the coloring material. When the content of the dispersant is less than 5 parts by mass, there is a tendency that the coloring material is hardly dispersed. On the other hand, when the content of the dispersant exceeds 150 parts by mass, there is a tendency that costs of starting materials increase and dispersion of the coloring material is inhibited.

Referring to the overall explanation of the ink jet ink, a viscosity of the ink jet ink is not limited particularly. The viscosity of the ink jet ink at 30°C is preferably not less than 5 mPa·s, more preferably not less than 6 mPa·s. Further, the viscosity of the ink jet ink at 30°C is preferably not more than 30 mPa·s, more preferably not more than 20 mPa·s. When the viscosity is within the above-mentioned range, the ink jet ink has excellent stability in discharging. When the viscosity is less than 5 mPa·s, stability in discharging at the time of ink jet printing tends to deteriorate. Meanwhile, when the viscosity is more than 30 mPa·s, there is a tendency that the ink jet ink cannot be ejected successfully from a head nozzle and stability in discharging at the time of ink jet printing deteriorates. It is noted that in the present embodiment, the viscosity can be measured using a Brookfield type viscometer (TVB-20LT manufactured by TOKI SANGYO CO., LTD.).

It is noted that a method of adjusting the viscosity to be within the above-mentioned range is not limited particularly. One example of the method is such that the viscosity can be adjusted depending on an amount of the fluorine resin to be used and kind and an amount of the solvent to be used. The viscosity may be adjusted using a viscosity modifier such as a thickener according to necessity.

A surface tension of the ink jet ink is not limited particularly. The surface tension of the ink jet ink at 25°C is preferably not less than 20 dyne/cm, more preferably not less than 22 dyne/cm. Further, the surface tension of the ink jet ink at 25°C is preferably not more than 40 dyne/cm, more preferably not more than 38 dyne/cm. When the surface tension is within the above-mentioned range, the ink jet ink has excellent stability in discharging. When the surface tension is less than 20 dyne/cm, there is a tendency that wettability of the ink jet ink becomes too high, thereby causing ink jet ink staining easily. Meanwhile, when the surface tension is more than 40 dyne/cm, there is a tendency that a surface of a substrate (or a base layer when the base layer is provided on the substrate) repels the ink jet ink easily and an obtained printed matter becomes unclear. It is noted that in the present embodiment, the surface tension can be measured using a static surface tension meter (plate method) (CBVP-A3 available from Kyowa Interface Science Co., Ltd.).

It is noted that a method of adjusting the surface tension to be within the above-mentioned range is not limited particularly. One example of the method is such that the surface tension can be adjusted by adding an acrylic surface modifier, a silicone surface modifier, a fluorine-containing surface modifier or the like to the ink jet ink.

A wetting index of the ink jet image layer is not limited particularly. The wetting index of the ink jet image layer is preferably not less than 20 dyne/cm, more preferably not less than 25 dyne/cm. Further the wetting index of the ink jet image layer is preferably not more than 50 dyne/cm, more preferably not more than 40 dyne/cm. When the wetting index is within the above-mentioned range, there is a merit that a uniform coating film is obtained easily on the printed matter even in the case of other ink or coating is applied to the ink jet image layer. It is noted that in this embodiment, the wetting index can be measured in accordance with the method described in JIS K 6768.

### <Formation of ink jet image layer>

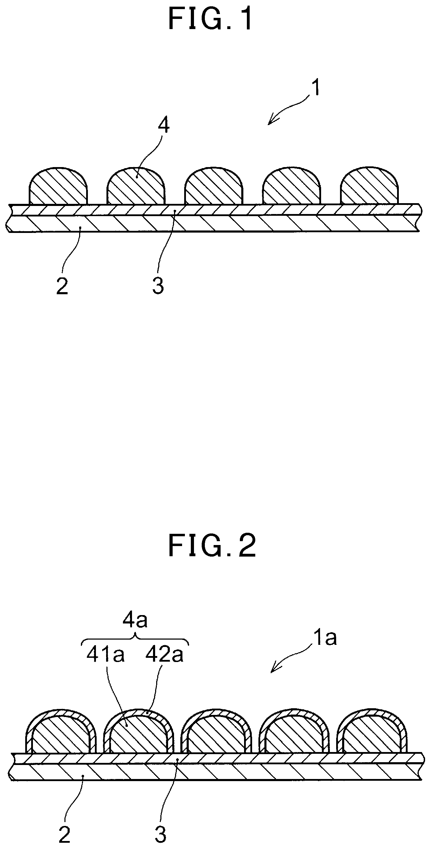

Referring to the overall explanation of the ink jet image layer, the ink jet image layer may be composed of a single layer or may be composed of a plurality of layers. FIG. 1 is a schematic cross-sectional view of the printed matter 1, where an ink jet image layer 4 is a single layer. FIG. 2 is a schematic cross-sectional view of the printed matter 1a, where an ink jet image layer 4a comprising a plurality of layers (First layer 41a and second layer 42a) is formed on. It is noted that in the following explanation, the printed matter comprises the base layer. The base layer may be omitted properly. If the base layer is omitted, the ink jet image layer may be formed on the substrate.

### (When a single ink jet image layer is formed)

As shown in FIG. 1, the printed matter 1 comprises the substrate 2, the base layer 3 formed on the substrate 2, and the single ink jet image layer 4 formed on the base layer 3. The ink jet image layer 4 comprises the coloring material and the fluorine resin as mentioned above. Such an ink jet image layer comprises the fluorine resin, and therefore, shows sufficient weather resistance even when a top coat is not provided.

### (When an ink jet image layer comprising plural layers is formed)

Meanwhile, the ink jet image layer may be composed of plural layers. FIG. 2 illustrates the printed matter 1a having the ink jet image layer 4a comprising two layers. In this case, the printed matter 1a comprises the substrate 2, the base layer 3 formed on the substrate 2 and the ink jet image layer 4a comprising plural layers formed on the base layer 3. The ink jet image layer can be configured to comprise one layer comprising a coloring material and another layer comprising no coloring material. FIG. 2 illustrates the case where the ink jet image layer 4a is composed of a first layer 41a comprising a coloring material and a second layer 42a covering the first layer 41a and comprising no coloring material. Thus, when the ink jet image layer is composed of plural layers, the printed matter hardly causes releasing of the coloring material due to deterioration of the resin as compared with the case of a printed matter comprising a single layer. Further, the printed matter can form the layer which does not comprise a coloring material so as to cover the first layer which comprises the coloring material. Therefore, the printed matter having an ink jet image layer comprising plural layers can be formed into an appearance making it easy to show unevenness and being excellent in designability. Further, functionality can be imparted to a desired part of the printed matter, for example, by adding a pigment having the functionality to the second layer. It is noted that the second layer 42a may be provided to cover the whole surface of the first layer 41a or a part of the first layer 41a.

Further, in this embodiment, when the ink jet image layer is composed of plural layers (for example, two layers), the fluorine resin may be compounded in at least one of the first layer or the second layer. More preferably the fluorine resin is compounded in both the first layer and the second layer. The case of the fluorine resin being compounded in both the first layer and the second layer is described below in detail as one example.

### First layer

The first layer can be formed by applying the first ink jet ink onto the base layer by an ink jet method. The first ink jet ink is compounded in the same manner as described above, and comprises the above-mentioned coloring material, fluorine resin and properly optional components.

The first ink jet ink according to this embodiment preferably comprises an antioxidant among the optional components. The antioxidant is not limited particularly. Examples of the antioxidant include phenol-based antioxidants, phosphorus-based antioxidants and the like.

Hindered phenol-based antioxidants are preferable as the phenol-based antioxidant. Examples of the hindered phenol-based antioxidants include 2,6-di-tert-butyl-p-cresol, C2-10 alkylenebis(tert-butylphenol) [for example, 2,2'-methylenebis(4-methyl-6-tert-butylphenol), 4,4'-methylenebis(2,6-di-tert-butylphenol) and the like], tris(di-tert-butyl-hydroxybenzyl)benzene [for example, 1,3,5-trimethyl-2,4,6-tris(3,5-di-tert-butyl-4-hydroxybenzyl)benzene and the like], C2-10 alkanediol-bis[(di-tert-buytl-hydroxyphenyl)propionate] [for example, 1,6-hexanediol-bis[3-(3,5-di-tert-butyl-4-hydroxyphenyl)propionate] and the like], di- or trioxy C2-4 alkanediol-bis(tert-butyl-hydroxyphenyl)propionate [for example, triethyleneglycol-bis[3-(3-tert-butyl-5-methyl-4-hydroxyphenyl)propionate] and the like], C3-8 alkanetriol-bis[(di-tert-butyl-hydroxyphenyl)propionate], C4-8 alkanetetraol tetrakis[(di-tert-butyl-hydroxyphenyl)propionate] [for example, pentaerythritol tetrakis[3-(3,5-di-tert-butyl-4-hydroxyphenyl)propionate] and the like], long chain alkyl(di-tert-butylphenyl)propionate [for example, n-octadecyl-3-(4',5'-di-tert-butylphenyl)propionate, stearyl-2-(3,5-di-tert-butyl-4-hydroxyphenyl)propionate] and the like], 2-tert-butyl-6-(3-tert-butyl-5-methyl-2-hydroxybenzyl)-4-methylphenyl acrylate, 4,4'-thiobis(3-methyl-6-tert-butylphenol) and the like.

Examples of the phosphorus-based antioxidants include mono to tris(molecular chain C3-6 alkyl-phenyl)phosphites such as tris(2,4-di-tert-buytlphenyl)phosphite and bis(2-tert-buytlphenyl)phenylphosphite; (branched chain C3 - 6 alkyl-aryl)phosphites of aliphatic polyhydric alcohol such as bis(2,6-di-tert-butyl-4-methylphenyl)pentaerythritol diphosphite and bis(2,4-di-tert-butylphenyl)pentaerythritol diphosphite; phosphonite-based compounds such as tetrakis(2,4-di-tert-butylphenyl)-4,4'-biphenylenediphosphonite; triphenylphosphate-based compounds such as tris(2,4-di-tert-butylphenyl)phosphate; alkali or alkaliearth metal phosphates (or hydrate thereof) such as metal phosphates, for example, primary calcium phosphate and primary sodium phosphate; and the like.

When the ink jet ink comprises the antioxidant, a content of the antioxidant is preferably not less than 0.1% by mass based on a total amount of the first ink jet ink. Further, the content of the antioxidant is preferably not more than 1.0% by mass, more preferably not more than 0.5% by mass based on a total amount of the first ink jet ink. When the content of the antioxidant is within the above-mentioned range, deterioration, especially yellowing of the first layer of the obtained printed matter is apt to be prevented.

### Second layer

The second layer can be formed by applying the second ink jet ink onto the first layer by an ink jet method. The second ink jet ink is compounded in the same manner as in the first ink jet ink described above except that a coloring material is not contained therein, and comprises the above-mentioned fluorine resin and properly optional components.

It is noted that in this embodiment, the second ink jet ink comprising no coloring material means that the second ink jet ink does not comprise the various inorganic pigments and organic pigments (namely pigments mainly for coloring purpose) mentioned above. Therefore, the second ink jet ink may comprise pigments (for example, extender pigments) mainly not for coloring purpose and various flatting agents. Examples of the extender pigment include calcium carbonate, kaolin clay, barium sulfate, aluminum hydroxide, talc and the like. Examples of the flatting agent include silica, resin beads and the like. Thus, the second layer can be formed as a layer exhibiting gloss adequately. Further, the second layer can be formed as a layer having a matting effect. In addition, the second ink jet ink comprising no coloring material may comprise pigments for imparting various functionalities to the ink jet layer. Examples of such pigments include silver nano particles for giving an antibacterial effect, gold nano particles giving a deodorizing effect, metal particles such as zinc sulfide particles for giving a light emission effect and the like.

It is preferable that the second ink jet ink according to this embodiment comprises an ultraviolet absorber or a light stabilizer among the optional components. These may be used in combination. The ultraviolet absorber or the light stabilizer is blended suitably for enhancing weather resistance of the printed matter. Namely, when the second layer comprises the ultraviolet absorber, an amount of ultraviolet rays transmitted to the first layer can be decreased. Thus, in the printed matter, deterioration of the first layer is prevented, and separation of the second layer from the first layer and discoloration are reduced particularly. As a result, the printed matter can show a desired color for a long period of time.

Examples of the ultraviolet absorber include benzotriazole ultraviolet absorbers, benzophenone ultraviolet absorbers, triazine derivatives, salicylic acid derivatives and the like. Examples of the benzotriazole ultraviolet absorbers include 2-(2'-hydroxy-5'-methylphenyl)benzotriazole, 2-(2'-hydroxy-5'-tert-butylphenyl)benzotriazole, 2-(2'-hydroxy-5'-tert-butylphenyl)-5-chlorobenzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amylphenyl)benzotriazole, 2-(2'-hydroxy-4'-octylphenyl)benzotriazole, 2-(2'-hydroxy-5'-methacryloxyethylphenyl)-2H-benzotriazole, 2-{(2'-hydroxy-3',3",4",5",6"-tetrahydrophthalimidemethyl)-5'-methylphenyl}benzotriazole and the like. Examples of the benzophenone ultraviolet absorbers include 2-hydroxybenzophenone, 5-chloro-2-hydroxybenzophenone, 2,4-dihydroxybenzophenone, 2-hydroxy-4-methoxybenzophenone, 2-hydroxy-4-octyloxybenzophenone, 2-hydroxy-4-dodecyloxybenzophenone, 2-hydroxy-4-octadecyloxybenzophenone, 2,2'-dihydroxy-4-methoxybenzophenone, 2,2'-dihydroxy-4,4'-dimethoxybenzophenone, 2-hydroxy-4-methoxy-5-sulfobenzophenone and the like. Examples of the triazine derivatives include 2-[4-{(2-hydroxy-3-dodecyloxy-propyl)oxy}-2-hydroxyphenyl]-4,6-bis(2, 4-dimethylphenyl)-1,3,5-triazine, 2-[4-{(2-hydroxy-3-tridecyloxy-propyl)oxy}-2-hydroxyphenyl]-4,6-bis(2, 4-dimethylphenyl)-1,3,5-triazine, 2-{4-(octyl-2-methylethanoate)oxy-2-hydroxyphenyl-4,6-{bis(2,4-dimet hylphenyl)}-1,3,5-triazine (brand name Tinuvin 479 available from BASF Japan), tris[2,4,6-[2-{4-(octyl-2-methylethanoate)oxy-2-hydroxyphenyl}]]-1,3,5-triazine and the like. Examples of the salicylic acid derivatives include phenylsalicylate, p-tert-butylphenylsalicylate, p-octylphenylsalicylate, p-(1,1,3,3-tetramethylbutyl)phenylsalicylate and the like. These ultraviolet absorbers may be used in combination. Among these, the ultraviolet absorber is preferably 2-{4-(octyl-2-methylethanoate)oxy-2-hydroxyphenyl-4,6-{bis(2,4-dimet hylphenyl)}-1,3,5-triazine from a point that it shows excellent ultraviolet absorption ability.

When the ink comprises an ultraviolet absorber, a content of the ultraviolet absorber is not limited particularly. One example of the content of the ultraviolet absorber in the second ink jet ink is preferably not less than 0.01% by mass, more preferably not less than 0.1% by mass. Further, the content of the ultraviolet absorber in the second ink jet ink is preferably not more than 10% by mass, more preferably not more than 5% by mass. When the content of the ultraviolet absorber is less than 0.01% by mass, performance of the ultraviolet absorber tends not to be exhibited sufficiently. Meanwhile, when the content of the ultraviolet absorber is more than 10% by mass, there is a tendency that further effect cannot be obtained and yet cost of the second ink jet ink becomes high.

### Light stabilizer

The light stabilizer is blended suitably for enhancing weather resistance of a printed matter. As a result, the printed matter can exhibit a desired color for a longer period of time.

Examples of the light stabilizer include hindered amine light stabilizers. Examples of the hindered amine light stabilizers include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, bis(1-undecyloxy-2,2,6,6-tetramethyl-4-piperidyl)carbonate, tetrakis(2,2,6,6-tetramethyl-4-piperidylbutanetetracarboxylate, tetrakis(1,2,2,6,6-pentamethyl-4-piperidylbutanetetracarboxylate, bis(2,2,6,6-tetramethyl-4-piperidyl)-di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,6,6-pentamethyl-4-piperidyl)-2-butyl-2-(3,5-ditertbutyl-4-hydroxybenzyl)malonate, 1-(2-hydroxyethyl)-2,2,6,6-tetramethyl-4-piperidinol/diethyl succinate condensation polymer, 1,6-bis(2,2,6,6-tetramethyl-4-piperidylamino)hexane/dibromoethane condensation polymer, 1,6-bis(2,2,6,6-tetramethyl-4-piperidylamino)hexane/2,4-dichloro-6-morphorino-s-triazine condensation polymer, 1,6-bis(2,2,6,6-tetramethyl-4-piperidylamino)hexane/2,4-dichloro-6-tertoctylamino-s-triazine condensation polymer, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl) amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-ylaminoundecane, 1,6,11-tris[2,4-bis(N-butyl-N-(1,2,2,6,6-pentamethyl-4-piperidyl)amino) -s-triazine-6-ylaminoundecane, bis(1-octyloxy-2,2,6,6-tetramethyl-4-piperidyl)-decanedioate and the like. These light stabilizers may be used in combination. Among these, the light stabilizer is preferably bis(1-octyloxy-2,2,6,6-tetramethyl-4-piperidyl)-decanedioate from a point that it is in a liquid form and is stable without reacting with other materials.

When the ink comprises a light stabilizer, a content of the light stabilizer is not limited particularly. One example of the content of the light stabilizer in the second ink jet ink is preferably not less than 0.01% by mass, more preferably not less than 0.1% by mass. Further, the content of the light stabilizer in the second ink jet ink is preferably not more than 10% by mass, more preferably not more than 5% by mass. When the content of the light stabilizer is less than 0.01% by mass, performance of the light stabilizer tends not to be exhibited sufficiently. Meanwhile, when the content of the light stabilizer is more than 10% by mass, there is a tendency that further effect cannot be obtained and yet cost of the second ink jet ink becomes high.

A thickness of the second layer is not limited particularly. The thickness of the second layer may be a thickness required for sufficiently preventing ultraviolet rays from penetrating through the first layer. Such a thickness of the second layer varies also depending on a content of the ultraviolet absorber when the second layer comprises the ultraviolet absorber. Therefore, the thickness of the second layer is not determined unequivocally. As one example, the thickness of the second layer can be adjusted to be 5 to 20 µm when a compounded amount of the ultraviolet absorber (for example, Tinuvin 479) is 2% by mass. Thus, by the second layer, the ultraviolet rays can be reduced by 70% or more. It is noted that here the ultraviolet rays have a wavelength of 360 nm. As a result, in the printed matter, deterioration of the first layer can be prevented, and separation of the second layer from the first layer and discoloration can be decreased. Incidentally, how much the ultraviolet rays are decreased can be determined with an infrared visible spectrophotometer (UV-1700 manufactured by Shimadzu Corporation).

Wetting indices of the first layer and the second layer are the same as that of the above-mentioned ink jet image layer. In the printed matter according to this embodiment, when the ink jet image layer comprising a plurality of layers is formed, the wetting index of the first layer is preferably equal to or higher than the wetting index of the second layer and is more preferably higher than the wetting index of the second layer. Thus, since the wetting index of the first layer is equal to or higher than the wetting index of the second layer, in the printed matter, the second layer can be applied uniformly without being repelled.

The first ink jet ink for forming the first layer and the second ink jet ink for forming the second layer may comprise the same curing agent as in the ink jet ink for forming the base layer. In the printed matter according to this embodiment, when the base layer, the first layer and the second layer comprise the curing agent, a relation between a crosslinking initiating temperature (T1) of the curing agent contained in the base layer (the curing agent for the base layer), a crosslinking initiating temperature (T2) of the curing agent contained in the first layer (the curing agent for the first layer) and a crosslinking initiating temperature (T3) of the curing agent contained in the second layer (the curing agent for the second layer) is preferably T1≤T2≤T3, more preferably T1<T2≤T3. Thus, the first layer can be cured at a temperature equal to or lower than that for the second layer. Further, the base layer can be cured at a temperature equal to or lower than that for the first layer. As a result, in the obtained printed matter, the ink jet image layer is formed on the base layer formed rigidly. Thus, staining or the like is hardly generated on the ink jet image layer.

Further, in the printed matter according to this embodiment, a relation between the crosslinking initiating temperature (T2) of the curing agent for the first layer and the crosslinking initiating temperature (T3) of the curing agent for the second layer is preferably T2≤T3. Thus, the first layer can be cured at a temperature equal to or lower than that for the second layer. As a result, in the obtained printed matter, the second layer is formed on the first layer formed rigidly. Thus, staining or the like is hardly generated on the ink jet image layer.

It is preferable that the first ink jet ink forming the first layer and the second ink jet ink forming the second layer comprise 4 to 40% by mass in total of the fluorine resin. In that case, it is preferable that the fluorine resin is contained in an amount of 2 to 15% by mass in the first ink jet ink forming the first layer. When the above-mentioned content of the fluorine resin is contained in the first ink jet ink, the pigment is retained easily in a coating film and is hardly released therefrom. Further, it is preferable that the fluorine resin is contained in an amount of 2 to 25% by mass in the second ink jet ink forming the second layer. When the above-mentioned content of the fluorine resin is contained in the second ink jet ink, a proper viscosity is obtained, and the obtained printed matter shows sufficient weather resistance easily.

The printed matter according to this embodiment can form an ink jet image layer by an ink jet method. Further, the printed matter comprises an ink jet image layer comprising a fluorine resin. Such an image layer shows sufficient weather resistance even if a top coat is not provided. Therefore, the printed matter can show a desired color for a long period of time.

### <Method for producing a printed matter>

The method for producing a printed matter according to one embodiment of the present invention mainly comprises an ink jetting step of applying an ink jet ink on a substrate by an ink jet method to form an ink jet image layer comprising a coloring material and a fluorine resin. According to the production method of this embodiment, the obtained printed matter is excellent in weather resistance. Therefore, the printed matter can show a desired color for a long period of time. Further the production method according to this embodiment may further comprise a base layer-forming step for forming the base layer on the substrate. In that case, the above-mentioned ink jetting step can be performed on the substrate having the base layer formed thereon. Example of this embodiment is described with respect to the case where the base layer-forming step is carried out and then the ink jetting step is performed on the substrate having the base layer formed thereon. It is noted that the details of the substrate, the base layer and the ink jet ink are the same as in the above-mentioned embodiment relating to the printed matter.

### (Base layer-forming step)

In the base layer-forming step, a method of applying a base composition to a substrate to form the base layer is not limited particularly. The base layer can be formed by applying the base composition to the substrate by spraying, using a roll coater or by means of application by hand or by an ink jet method.

### (Ink jetting step)

In the ink jetting step, a method of applying an ink jet ink onto the base layer by an ink jet recording method is not limited particularly. Examples of such method include continuous types such as a charge modulation type, a micro-dot type, a charge injection control type and an ink mist type; on-demand types such as a piezo type, a pulse jet type, a Bubble Jet (registered trademark) type and an electrostatic suction type; and the like.

When forming the ink jet image layer comprising plural layers (for example, the above-mentioned first layer and second layer), the ink jetting step may comprise a first layer-forming step for applying a first ink jet ink comprising a coloring material onto the base layer and a second layer-forming step for applying a second ink jet ink comprising no coloring material so as to cover the first layer. Further, the fluorine resin may be contained in at least either of the first ink jet ink or the second ink jet ink. The details of the first ink jet ink and the second ink jet ink are the same as in the above-mentioned embodiment relating to the printed matter. According to such production method, a desired ink jet image is formed by the first layer comprising the coloring material and then the first layer is covered with the second layer comprising no coloring material. Excellent weather resistance is imparted to the obtained printed matter since the fluorine resin is contained in at least either of the first layer or the second layer.

Further when forming the ink jet image layer comprising plural layers (for example, the above-mentioned first layer and second layer), it is preferable that a surface tension of the first ink jet ink is adjusted to be not lower than a surface tension of the second ink jet ink, thereby allowing the second ink jet ink to be applied uniformly without being repelled.

The substrate to which the ink jet ink was applied is then subjected to drying. Drying conditions are not limited particularly. As an example of drying conditions, the drying can be performed by heat-treatment at 50 to 250°C for 1 to 60 minutes. By such drying, a solvent in the ink jet ink can be removed. It is preferable that the drying is carried out at the same time when the ink jet ink is applied to the substrate or immediately after the ink jet ink was applied to the substrate in order to prevent the ink jet image from staining.

The embodiment of the present invention was described above by properly referring to the drawings. For example, the following variants of the embodiment can be adopted for the printed matter and the method of producing the printed matter according to the present invention.
(1) In the above-mentioned embodiment, the printed matter provided with no top coat was exemplified. In the present invention, in place of such embodiment, a top coat may be provided to cover the ink jet image layer. In that case, the obtained printed matter is provided with further excellent weather resistance.
(2) In the above-mentioned embodiment, the ink jet image layer comprising two layers was exemplified. In the present invention, in place of such embodiment, the ink jet image layer may comprise three or more layers. In that case, among the layers constituting the ink jet image layer, at least one layer may comprise a fluorine resin.
(3) In the above-mentioned embodiment, when the ink jet image layer comprises the first layer and the second layer, a mode of both the first layer and the second layer comprising the fluorine resin was exemplified. In the present invention, in place of such embodiment, only the first layer may comprise the fluorine resin or only the second layer may comprise the fluorine resin. When only the first layer comprises the fluorine resin, the printed matter can be produced at relatively low cost. Meanwhile, when only the second layer comprises the fluorine resin, degrading of glossness on a surface of the printed matter can be decreased.
(4) In the above-mentioned embodiment (production method of a printed matter), a mode of performing the base layer-forming step and the ink jetting step on the substrate having the base layer formed thereon was exemplified. In the present invention, in place of such embodiment, the base layer-forming step may be omitted. In that case, the ink jetting step is a step of applying the ink jet ink on the substrate by the ink jet method to form the ink jet image layer comprising the coloring material and the fluorine resin.

One embodiment of the present invention is as mentioned above. The present invention is not limited to the above-mentioned embodiment. The above-mentioned embodiment is one embodiment of the invention having the following configurations.
(1) A printed matter comprising a substrate and an ink jet image layer formed on the substrate, where the ink jet image layer comprises a coloring material and a fluorine resin.
   According to such a configuration as mentioned above, the printed matter can be provided with an ink jet image layer formed by an ink jet method. The printed matter includes an ink jet image layer comprising a fluorine resin. Such an ink jet image layer shows a sufficient weather resistance even in the case where no top coat is provided. As a result, the printed matter can show a desired color for a long period of time.
(2) The printed matter of above (1), where the ink jet image layer comprises a first layer comprising the coloring material and a second layer covering the first layer and comprising no coloring material, and the fluorine resin is included in at least either of the first layer or the second layer.
   According to such a configuration as mentioned above, a desired ink jet image can be formed with the first layer comprising the coloring material. Further, the first layer can be covered with the second layer comprising no coloring material. Since at least either of the first layer or the second layer comprises the fluorine resin, the obtained ink jet image layer shows an excellent weather resistance.
(3) The printed matter of above (2), where the first layer comprises an antioxidant.
   According to such a configuration as mentioned above, deterioration of the first layer of the printed matter can be inhibited.
(4) The printed matter of above (2) or (3), where the second layer comprises an ultraviolet absorber or a photo-stabilizer.
   According to such a configuration as mentioned above, the printed matter can exhibit further excellent weather resistance. As a result, the printed matter can show a desired color for a longer period of time.
(5) The printed matter of any one of above (2) to (4), where the first layer further comprises a curing agent for the first layer, the second layer further comprises a curing agent for the second layer, and a crosslinking reaction initiating temperature of the curing agent for the first layer is not higher than a crosslinking reaction initiating temperature of the curing agent for the second layer.
   According to such a configuration as mentioned above, in the printed matter, the second layer can be formed on the first layer formed more rigidly. As a result, in the obtained printed matter, staining or the like is hardly generated on the ink jet image layer.
(6) The printed matter of any one of above (1) to (5), further comprising a base layer between the substrate and the ink jet image layer.
   According to such a configuration as mentioned above, in the printed matter, the ink jet image layer can be formed on the base layer by an ink jet method. Further, the printed matter comprises the ink jet image layer comprising a fluorine resin. Such an ink jet image layer shows a sufficient weather resistance even in the case where no top coat is provided. As a result, the printed matter can show a desired color for a long period of time.
(7) The printed matter of above (5), further comprising a base layer between the substrate and the ink jet image layer, where the base layer further comprises a curing agent for the base layer, a crosslinking reaction initiating temperature of the curing agent for the base layer is not higher than a crosslinking reaction initiating temperature of the curing agent for the first layer, and a crosslinking reaction initiating temperature of the curing agent for the first layer is not higher than a crosslinking reaction initiating temperature of the curing agent for the second layer.
   According to such a configuration as mentioned above, in the printed matter, the ink jet image layer can be formed on the base layer formed more rigidly. As a result, in the obtained printed matter, staining or the like is hardly generated on the ink jet image layer.
(8) The printed matter of above (6) or (7), where the base layer comprises a fluorine resin.
   According to such a configuration as mentioned above, excellent weather resistance is imparted to not only the ink jet image layer but also the base layer. As a result, in the printed matter, not only a part thereof where the ink jet image layer is formed but also the whole thereof exhibit excellent weather resistance.
(9) The printed matter of any one of above (1) to (8), where the coloring material comprises an inorganic pigment.
   According to such a configuration as mentioned above, color fading due to degrading of the coloring material is hardly caused.
(10) The printed material of any one of above (1) to (9), where a top coat is further formed on the ink jet image layer.
   According to such a configuration as mentioned above, further excellent weather resistance is imparted to the printed matter.
(11) A method for producing a printed matter, comprising an ink jetting step of applying an ink jet ink on a substrate by an inkjet method to form an ink jet image layer comprising a coloring material and a fluorine resin.
   According to such a configuration as mentioned above, the production method enables a printed matter having an ink jet image layer formed thereon to be produced by an ink jet method. The obtained printed matter comprises the ink jet image layer comprising a fluorine resin. Such an ink jet image layer shows sufficient weather resistance even if a top coat is not formed thereon. As a result, the production method enables the printed matter showing a desired color for a long period of time to be produced.
(12) The method for producing a printed matter of above (11), where the ink jet ink comprises a first ink jet ink comprising the coloring material and a second ink jet ink comprising no coloring material, the fluorine resin is included in at least either of the first ink jet ink or the second ink jet ink, and the ink jetting step comprises a first layer forming step of applying the first ink jet ink on the substrate and a second layer forming step of applying the second ink jet ink to cover the first layer.
   According to such a configuration as mentioned above, the production method enables a desired ink jet image to be formed with the first layer comprising the coloring material. Further, the production method enables the first layer to be covered with the second layer comprising no coloring material. According to the production method, since the fluorine resin is contained in at least either of the first layer or the second layer, excellent weather resistance can be imparted to the obtained ink jet image layer.
(13) The method for producing a printed matter of above (12), where a surface tension of the first ink jet ink is not less than a surface tension of the second ink jet ink.
   According to such a configuration as mentioned above, the production method can impart more uniform second layer.
(14) The method for producing a printed matter of any one of above (11) to (13), further comprising a base layer forming step of forming a base layer on the substrate, where the ink jetting step is performed on the substrate on which the base layer was formed.

According to such a configuration as mentioned above, the production method enables a printed matter having an ink jet image layer formed on the base layer by an ink jet method to be produced. The obtained printed matter comprises the ink jet image layer comprising a fluorine resin. Such an ink jet image layer shows sufficient weather resistance even if a top coat is not formed thereon. As a result, the production method enables the printed matter showing a desired color for a long period of time to be produced.

### EXAMPLE

The present invention is then explained by means of Examples. The present invention is not limited to the Examples.

Starting materials used are shown below.

### (Fluorine resin)

LF-200F: Alternating copolymer of ethylene trifluoride and a vinyl monomer manufactured by AGC INC., hydroxyl value: 50 mg KOH/g, acid value: 0 mg KOH/g, Mw: 20,000, non-volatile matter content: 100%
Acrylic resin: BR-105 manufactured by MITSUBISHI RAYON CO., LTD., Mw: 50,000

### (Dispersant)

SOLSPERSE 33000: Polymer dispersant, base value: 41.6 mgKOH/g, available from Lubrizol Japan

### (Pigment)

Hostaperm Blue BT617D: Cyanic organic pigment available from Clariant
DAIPYROXIDE BLUE #9410: Cyanic inorganic pigment available from Dainichiseika Color & Chemicals Mfg. Co., Ltd.

### (Solvent)

DEDG: Diethylene glycol diethyl ether, glycol ether solvent, boiling point 189°C, available from Nippon Nyukazai Co., Ltd.
MTEM: Tetraethylene glycol dimethyl ether, glycol ether solvent, boiling point 275°C, available from TOHO CHEMICAL INDUSTRY CO., LTD.

### (Curing agent)

X2252-2: Blocked isocyanate, crosslinking reaction initiating temperature: 110°C, manufactured by Asahi Kasei Chemicals Corporation

### (Catalyst)

Dibutyltin dilaurate: Metallic compound catalyst

### (Photo-stabilizer)

Tinuvin 123: HALS available from BASF Japan

### (Ultraviolet absorber)

Tinuvin 479: UVA available from BASF Japan

### (Wetting agent)

F-556: Fluorine-containing surfactant, available from DIC CORPORATION

### (Antioxidants)

IRGANOX 1010: available from BASF Japan
IRGAFOS 168: available from BASF Japan

### <Base composition>

The following compositions were used as a base composition for forming a base layer.

Base composition 1: SUPER COAT DB5000 Line (White polyester-based thermosetting paint, crosslinking reaction initiating temperature: 110°C, manufactured by Daiho Paint Ltd.)

Base composition 2: BONNFLON #1000SR top coat (White fluorine-containing thermosetting paint, crosslinking reaction initiating temperature: 90°C, manufactured by AGC COAT-TECH Co., Ltd.)

### <First ink jet ink and second ink jet ink>

Each of the first ink jet inks 1-4 and the second ink jet inks 1-4 was prepared according to the formulations described in the following table as the first ink jet ink for forming the first layer and the second ink jet ink for forming the second layer.

### <Composition for top coat>

The second ink jet ink 4 was used as the composition for top coat for forming the top coat.

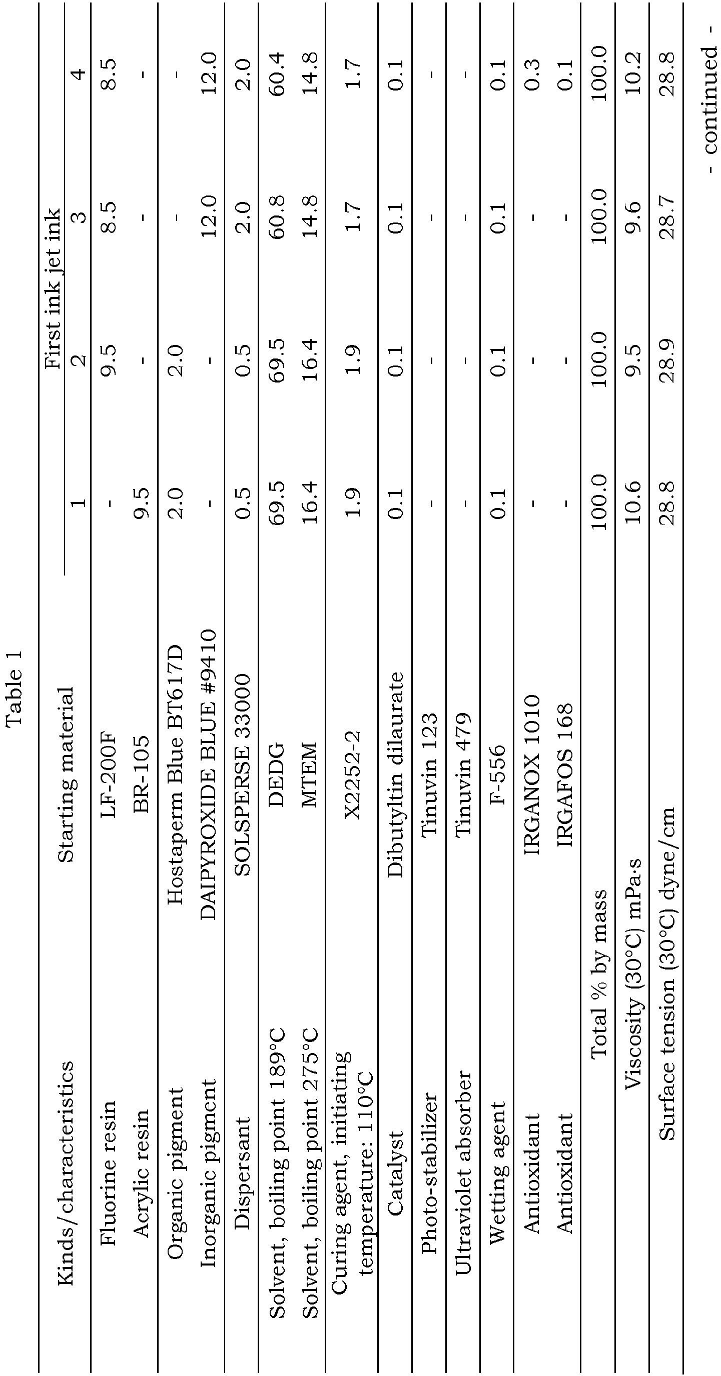

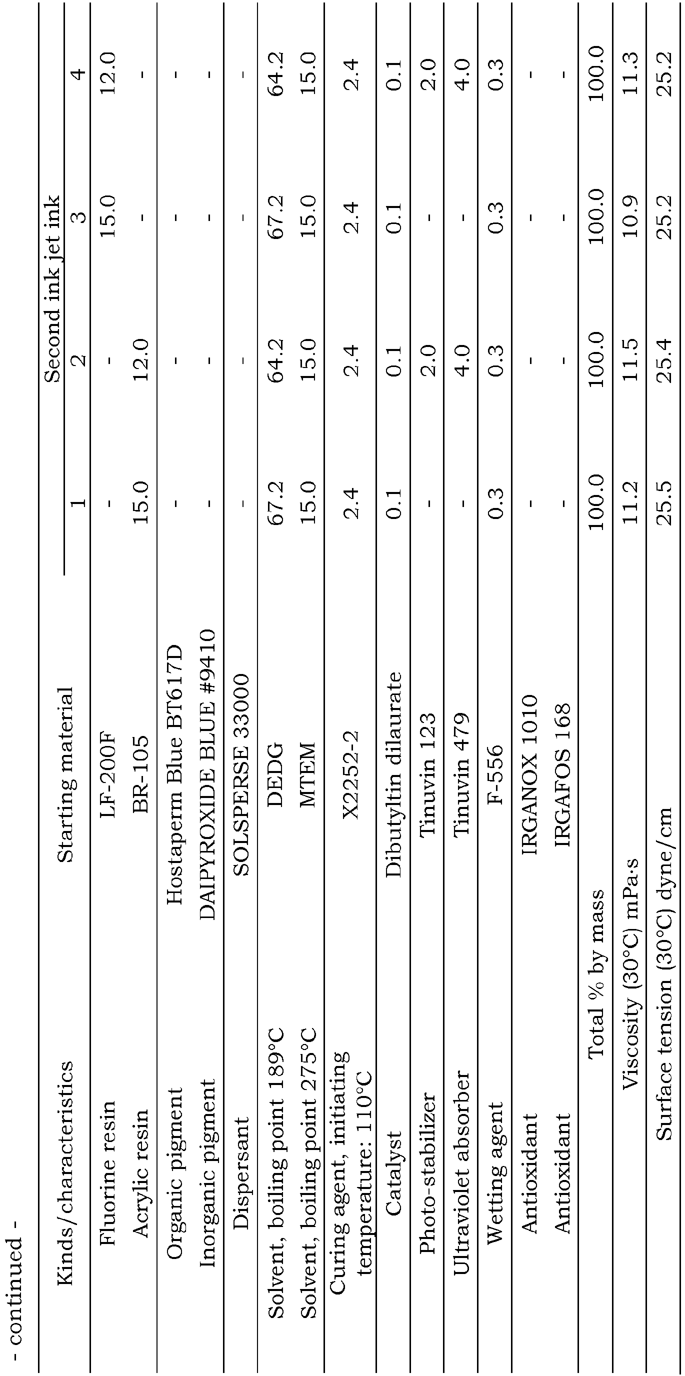

### (Viscosity)

A viscosity was measured under a temperature of 30°C using a Brookfield type viscometer (TVB-20LT manufactured by Toki Sangyo Co., Ltd.).

### (Surface tension)

A surface tension was measured using a static surface tension meter (plate method) (CBVP-A3 manufactured by Kyowa Interface Science Co., Ltd.).

### (Examples 1 to 11 and Comparative Examples 1 to 4)

Each layer (Base layer, ink jet image layer and top coat according to necessity) was formed according to formulations shown in the following Table 2 by the following method to produce a printed matter. In Examples 1 to 3 and Comparative Example 1, an ink jet image layer comprising a single layer was formed using only the first ink jet ink. In other Examples and Comparative Examples, ink jet image layers comprising plural layers (two layers) were formed. In only Example 11 and Comparative Example 4, a top coat was provided.

### (Example 12)

A printed matter was produced by the same method as in Example 1 except that a base layer was not formed and an ink jet image layer was formed directly on a substrate.

**Table 2**

| | Kind of base composition | Kind of 1st ink jet ink | Kind of 2nd ink jet ink | Kind of composition for top coat | Results of evaluation | | |
|---|---|---|---|---|---|---|---|
| | | | | | Discoloration ΔE | Gloss retention ratio | Peeling of coating film |
| Ex. 1 | Base composition 2 | 1st ink jet ink 2 | - | - | Δ | ○ | ○ |
| Ex. 2 | Base composition 2 | 1st ink jet ink 3 | - | - | ○ | ○ | ○ |
| Ex. 3 | Base composition 2 | 1st ink jet ink 4 | - | - | ○ | ○ | ○ |
| Ex. 4 | Base composition 2 | 1st ink jet ink 4 | 2nd ink jet ink 1 | - | ○ | Δ | ○ |
| Ex. 5 | Base composition 2 | 1st ink jet ink 4 | 2nd ink jet ink 2 | - | ⊚ | ○ | ○ |
| Ex. 6 | Base composition 2 | 1st ink jet ink 1 | 2nd ink jet ink 3 | - | Δ | ○ | ○ |
| Ex. 7 | Base composition 2 | 1st ink jet ink 1 | 2nd ink jet ink 4 | - | Δ | ⊚ | ○ |
| Ex. 8 | Base composition 2 | 1st ink jet ink 4 | 2nd ink jet ink 3 | - | ○ | ○ | ○ |
| Ex. 9 | Base composition 2 | 1st ink jet ink 4 | 2nd ink jet ink 4 | - | ⊚ | ⊚ | ○ |
| Ex. 10 | Base composition 1 | 1st ink jet ink 4 | 2nd ink jet ink 4 | - | ⊚ | ⊚ | Δ |
| Ex. 11 | Base composition 2 | 1st ink jet ink 4 | 2nd ink jet ink 4 | 2nd ink jet ink 4 | ⊚ | ⊚ | ○ |
| Ex. 12 | - | 1st ink jet ink 2 | - | - | Δ | ○ | ○ |
| Com. Ex. 1 | Base composition 1 | 1st ink jet ink 1 | - | - | × | × | × |
| Com. Ex. 2 | Base composition 1 | 1st ink jet ink 1 | 2nd ink jet ink 1 | - | × | Δ | × |
| Com. Ex. 3 | Base composition 1 | 1st ink jet ink 1 | 2nd ink jet ink 2 | - | Δ | Δ | Δ |
| Com. Ex. 4 | Base composition 1 | 1st ink jet ink 1 | - | 2nd ink jet ink 4 | Δ | ⊚ | Δ |

### (Formation of base layer)

### • When using the base composition 1

The base composition 1 was applied to a substrate (aluminum plate subjected to chromate treatment) in an amount of about 150 g/m² with an air sprayer (dry coating thickness: about 25 µm), followed by drying under an environment of 140°C for 20 minutes.

### • When using the base composition 2

The base composition 2 was applied to a substrate (aluminum plate subjected to chromate treatment) in an amount of about 150 g/m² with an air sprayer (dry coating thickness: about 25 µm), followed by drying under an environment of 200°C for three minutes.

### (Formation of ink jet image layer)

An ink jet image later was formed on a substrate (or a substrate with a base layer formed thereon) under the following ink jet conditions.

### <Ink jet conditions>

Ink jet recording apparatus: Piezo type
Nozzle diameter: 40 µm
Driving voltage: 70 V
Ink dot size: 30 pl
Frequency: 12 kHz
Resolution: 400 × 800 dpi
Substrate temperature: 60°C (heating)
Evaluated pattern: 100 mm square solid printing pattern

### <Drying conditions>

Drying by heating (under a temperature of 200°C, one minute)

### (Formation of top coat)

The second ink jet ink 4 as the composition for the top coat was applied in an amount of about 150 g/m² (dry coating thickness: about 30 µm) with an air sprayer, followed by one-minute drying under a temperature of 200°C.

The printed matters obtained in Examples 1 to 12 and Comparative Examples 1 to 4 were subjected to evaluation by the following evaluation methods in accordance with the following evaluation criteria. The results are shown in Table 2.

### <Discoloration ΔE>

The printed matters were subjected to 6-hour ultraviolet irradiation (UV irradiation conditions: 100 mW/cm², temperature: 63°C, humidity: 50%) as an ultra-accelerated weathering test using SUPER UV TESTER (SUV-W161 manufactured by IWASAKI ELECTRIC CO., LTD.), and then after 30-minute showering, were subjected to 2-hour dew formation of one cycle, totally 1,000 hours by the course of nature. The ΔE after the test is regarded as a color difference. The color difference was measured using a spectrophotometer (CM-3700 manufactured by Konica Minolta, Inc.).

### (Evaluation criteria)

⊚ : Color difference was ΔE≤3
○ : Color difference was 3<ΔE≤8
Δ : Color difference was 8<ΔE≤16
× : Color difference was ΔE>16

### <Gloss retention ratio>

A gloss retention ratio is a ratio of gloss of a printed matter after the ultra-accelerated weathering test to gloss of a printed matter before the ultra-accelerated weathering test. The gloss was measured using Gloss Checker (IG-410 manufactured by Horiba, Ltd.)

### (Evaluation criteria)

⊚ : Gloss retention ratio was 50% or more.
○ : Gloss retention ratio was 30% or more and less than 50%
Δ : Gloss retention ratio was 10% or more and less than 30%
× : Gloss retention ratio was less than 10%

### <Peeling of coating film>

The samples after the ultra-accelerated weathering test was subjected to a lattice pattern cutting test (1 mm wide, 100 squares), and peeling of the coating film was evaluated in accordance with JIS K 5400.

### (Evaluation criteria)

○ : Coating film was not peeled off
Δ : Coating film was partially peeled off
× : Coating film was wholly peeled off

As shown in Table 2, in any of the printed matters obtained in Examples 1 to 12, ink jet image layers formed are hardly discolored, gloss thereof are hardly decreased, and the layers are hardly peeled off as compared with the printed matters obtained in Comparative Examples 1 to 4. As it can be seen especially from Examples 1 and 12, the printed matters according to the present invention are hardly discolored, gloss thereof are hardly decreased and the ink jet image layer which is hardly peeled off in either of the case where the ink jet image layer is formed directly on the substrate and the case where the ink jet image layer is formed on the substrate on which a base layer has been formed. Further, the printed matter of Example 9 showed an excellent weather resistance being the same level as that of the printed matter of Example 11 having a top coat. Therefore, it is seen that in the present invention, excellent weather resistance is exhibited even in the case where no top coat is provided.

### Explanation of Symbols

- 1, 1a: Printed matter
- 2: Substrate
- 3: Base layer
- 4,4a: Ink jet image layer
- 41a: First layer
- 42a: Second layer

## Claims

1. A printed matter comprising a substrate and an ink jet image layer formed on the substrate, wherein the ink jet image layer comprises a coloring material and a fluorine resin.

2. The printed matter of claim 1, wherein the ink jet image layer comprises a first layer comprising the coloring material and a second layer covering the first layer and comprising no coloring material, and
the fluorine resin is included in at least either of the first layer or the second layer.

3. The printed matter of claim 2, wherein the first layer comprises an antioxidant.

4. The printed matter of claim 2 or 3, wherein the second layer comprises an ultraviolet absorber or a photo-stabilizer.

5. The printed matter of any one of claims 2 to 4, wherein the first layer further comprises a curing agent for the first layer,
the second layer further comprises a curing agent for the second layer, and
a crosslinking reaction initiating temperature of the curing agent for the first layer is not higher than a crosslinking reaction initiating temperature of the curing agent for the second layer.

6. The printed matter of any one of claims 1 to 5, further comprising a base layer between the substrate and the ink jet image layer.

7. The printed matter of claim 5, further comprising a base layer between the substrate and the ink jet image layer,
wherein the base layer further comprises a curing agent for the base layer,
a crosslinking reaction initiating temperature of the curing agent for the base layer is not higher than a crosslinking reaction initiating temperature of the curing agent for the first layer, and
a crosslinking reaction initiating temperature of the curing agent for the first layer is not higher than a crosslinking reaction initiating temperature of the curing agent for the second layer.

8. The printed matter of claim 6 or 7, wherein the base layer comprises a fluorine resin.

9. The printed matter of any one of claims 1 to 8, wherein the coloring material comprises an inorganic pigment.

10. The printed matter of any one of claims 1 to 9, wherein a top coat is further formed on the ink jet image layer.

11. A method for producing a printed matter, comprising an ink jetting step of applying an ink jet ink on a substrate by an inkjet method to form an ink jet image layer comprising a coloring material and a fluorine resin.

12. The method for producing a printed matter of claim 11,
wherein the ink jet ink comprises a first ink jet ink comprising the coloring material and a second ink jet ink comprising no coloring material,
the fluorine resin is included in at least either of the first ink jet ink or the second ink jet ink, and
the ink jetting step comprises a first layer forming step of applying the first ink jet ink on the substrate and a second layer forming step of applying the second ink jet ink to cover the first layer.

13. The method for producing a printed matter of claim 12,
wherein a surface tension of the first ink jet ink is not less than a surface tension of the second ink jet ink.

14. The method for producing a printed matter of any one of claims 11 to 13, further comprising a base layer forming step of forming a base layer on the substrate,
wherein the ink jetting step is performed on the substrate on which the base layer was formed.
